# EUROPEAN PATENT APPLICATION

(11) **EP 4 474 887 A1**
(43) Date of publication of application: **11.12.2024**
(21) Application number: 22923953.8
(22) Date of filing: 31.01.2022
(51) Int. Cl.: G02F 1/01

(54) **OPTICAL WAVEGUIDE ELEMENT, AND OPTICAL MODULATION DEVICE AND OPTICAL TRANSMISSION APPARATUS WHICH USE SAME**

(71) Applicant: Sumitomo Osaka Cement Co., Ltd., Tokyo, 105-8641 (JP)
(72) Inventor: OKAHASHI, Kosuke, Tokyo 102-8465 (JP); MOTOYA, Masayuki, Tokyo 102-8465 (JP)
(74) Representative: Sonnenberg Harrison Partnerschaft mbB
(86) International application number: PCT/JP2022/003679
(87) International publication number: WO 2023/145090

(57) **Abstract**

An object of the present invention is to suppress deterioration in a drift characteristic by removing unnecessary light propagating through a substrate. Furthermore, an optical waveguide device that can also suppress a propagation loss of a high-frequency signal is provided. An optical waveguide device of the present invention is an optical waveguide device including an optical waveguide 10 formed on a substrate 1, and an electrode (SE1, GE1) disposed on the substrate, in which a first underlayer 21 of a first material formed on an upper surface of the substrate 1 and a second underlayer 20 of a second material different from the first material formed on an upper surface of the first underlayer are disposed in at least a part of a region on the substrate in which the electrode is formed, and the electrode is formed on an upper side of the second underlayer.

## Description

### Technical Field

The present invention relates to an optical waveguide device, and an optical modulation device and an optical transmission apparatus using the same, and particularly to an optical waveguide device including an optical waveguide formed on a substrate and an electrode disposed on the substrate.

### Background Art

In the field of optical measurement technology or the field of optical communication technology, or furthermore, in devices used as sensors, optical waveguide devices such as an optical modulator using a substrate having an electro-optic effect have been widely used. In a general optical waveguide device, an optical waveguide is formed on a substrate of lithium niobate (LN) or the like having an electro-optic effect, and an electrode that applies an electric field to the optical waveguide is formed on the substrate.

While gold (Au) has been mainly used in the electrode, gold cannot be brought into close contact with the substrate of LN or the like. Thus, normally, Ti is formed as a underlayer, and the electrode of gold is formed on the underlayer. However, since Ti is likely to be oxidized and takes oxygen from the substrate of LN or the like, an oxygen-deficient layer is formed on a surface of the substrate. Formation of the oxygen-deficient layer causes deterioration in a drift characteristic of the optical modulator or the like.

In order to suppress this drift phenomenon, Patent Literature No. 1 discloses using, in the underlayer, a metal material of which a standard enthalpy of formation per coordinate bond when oxidized is higher than a standard enthalpy per coordinate bond of niobium pentoxide.

However, the underlayer of Ti or the like that is in contact with the surface of the substrate is expected to have effects of not only simply securing a close contact with the electrode of gold (Au) but also absorbing and removing unnecessary light such as a light wave that leaks to the substrate or the like without propagating through the optical waveguide. Thus, forming the underlayer as thin as possible while using Ti is considered. However, as shown in Patent Literature No. 2, in a case where a thickness of Ti is set to approximately 50 nm, a plating particle size of the Au electrode is increased, and surface roughness Ra is increased because of roughness formed on a surface of the electrode. In a case where the surface roughness Ra is increased, a propagation loss of a high-frequency signal is also increased, and this causes deterioration in a modulation characteristic of the optical modulator.

On the other hand, there has been demand for size reduction of the optical modulator, and there has been demand for disposing the optical waveguide and the electrode closer to each other. In a case where the underlayer of Ti is disposed under the electrode, a part of the light wave propagating through the optical waveguide is absorbed by Ti, and the propagation loss of light is also increased. In order to eliminate this problem, Patent Literature No. 3 suggests using Nb in the underlayer instead of Ti. However, in a case where Nb is disposed on the surface of the substrate, the unnecessary light propagating through the substrate cannot be removed, and the unnecessary light is superimposed on the light wave propagating through the optical waveguide. Thus, an S/N ratio of an optical signal is significantly decreased.

### Citation List

### Patent Literature

[Patent Literature No. 1] Japanese Laid-open Patent Publication No. 2019-174733
[Patent Literature No. 2] Japanese Laid-open Patent Publication No. 2007-122038
[Patent Literature No. 3] Japanese Patent Application No. 2020-164627 (filed on September 30, 2020)

### Summary of Invention

### Technical Problem

An object to be solved by the present invention is to solve the above problem and to provide an optical waveguide device that can suppress deterioration in a drift characteristic by suppressing formation of an oxygen-deficient layer in a substrate while maintaining a function of removing unnecessary light propagating through the substrate even in a case where an electrode is disposed on the substrate on which an optical waveguide is formed. In addition, an optical waveguide device that can also suppress a propagation loss of a high-frequency signal by further decreasing roughness of a surface of an electrode is provided. Furthermore, an optical modulation device and an optical transmission apparatus using the optical waveguide device are provided.

### Solution to Problem

In order to solve the object, an optical waveguide device of the present invention, and an optical modulation device and an optical transmission apparatus using the same have the following technical features.
(1) An optical waveguide device includes an optical waveguide formed on a substrate, and an electrode disposed on the substrate, in which a first underlayer of a first material formed on an upper surface of the substrate and a second underlayer of a second material different from the first material formed on an upper surface of the first underlayer are disposed in at least a part of a region on the substrate in which the electrode is formed, and the electrode is formed on an upper side of the second underlayer.
(2) In the optical waveguide device according to (1), an optical absorption coefficient of the first material is higher than an optical absorption coefficient of the second material.
(3) In the optical waveguide device according to (1) or (2), a thickness of the first underlayer is 10 nm or less.
(4) In the optical waveguide device according to any one of (1) to (3), the electrode is provided with a modulation electrode including an action portion that applies an electric field of a high-frequency signal to the optical waveguide, in the action portion, the second underlayer is disposed on the upper surface of the substrate under the modulation electrode closest to the optical waveguide, and the upper surface of the substrate is sequentially laminated with the first underlayer and the second underlayer under the modulation electrode separated by more than a predetermined distance from the optical waveguide.
(5) In the optical waveguide device according to any one of (1) to (3), the substrate is sequentially laminated with the first underlayer and the second underlayer under the electrode formed in at least a part of a region in which unnecessary light propagates through the substrate.
(6) In the optical waveguide device according to any one of (1) to (3), the second underlayer is disposed on an upper surface of the optical waveguide under the electrode disposed on an upper side of the optical waveguide.
(7) In the optical waveguide device according to any one of (1) to (3), the first material is titanium, and the second material is niobium.
(8) An optical modulation device including the optical waveguide device according to any one of (1) to (7), a case accommodating the optical waveguide device, and an optical fiber through which a light wave is input into the optical waveguide or output from the optical waveguide.
(9) In the optical modulation device according to (8), the optical waveguide device includes a modulation electrode for modulating the light wave propagating through the optical waveguide, and an electronic circuit that amplifies a modulation signal to be input into the modulation electrode of the optical waveguide device is provided inside the case.
(10) An optical transmission apparatus including the optical modulation device according to (8) or (9), and an electronic circuit that outputs a modulation signal causing the optical modulation device to perform a modulation operation.

### Advantageous Effects of Invention

In the present invention, an optical waveguide device includes an optical waveguide formed on a substrate, and an electrode disposed on the substrate, in which a first underlayer of a first material formed on an upper surface of the substrate and a second underlayer of a second material different from the first material formed on an upper surface of the first underlayer are disposed in at least a part of a region on the substrate in which the electrode is formed, and the electrode is formed on an upper side of the second underlayer. Thus, it is possible to provide the optical waveguide device in which the first underlayer has a function of absorbing the unnecessary light and the like, and the second underlayer has a function of further decreasing roughness Ra of a surface of the electrode.

In addition, a higher optical absorption effect can be set by setting the optical absorption coefficient of the first material to be higher than the optical absorption coefficient of the second material.

Furthermore, by setting the thickness of the first underlayer to 10 nm or less, formation of an oxygen-deficient layer on the surface of the substrate can be suppressed by an oxidizing action of the first underlayer, and deterioration in the drift characteristic can also be suppressed.

The optical waveguide device having such advantageous characteristics can also be used to provide the optical modulation device and the optical transmission apparatus achieving the same effect.

### Brief Description of Drawings

FIG. 1 is a plan view illustrating an example of an optical waveguide device according to the present invention.
FIG. 2 is a diagram illustrating an example of a cross section state in a region A in FIG. 1.
FIG. 3 is a diagram illustrating another example of the cross section state in the region A in FIG. 1.
FIG. 4 is a diagram illustrating an example of a cross section state in a region B in FIG. 1.
FIG. 5 is a diagram illustrating an example of a cross section state in a region C in FIG. 1.
FIG. 6 is a diagram illustrating an example of a cross section state in a region D in FIG. 1.
FIG. 7 is a plan view for describing an optical modulation device and an optical transmission apparatus of the present invention.

### Description of Embodiments

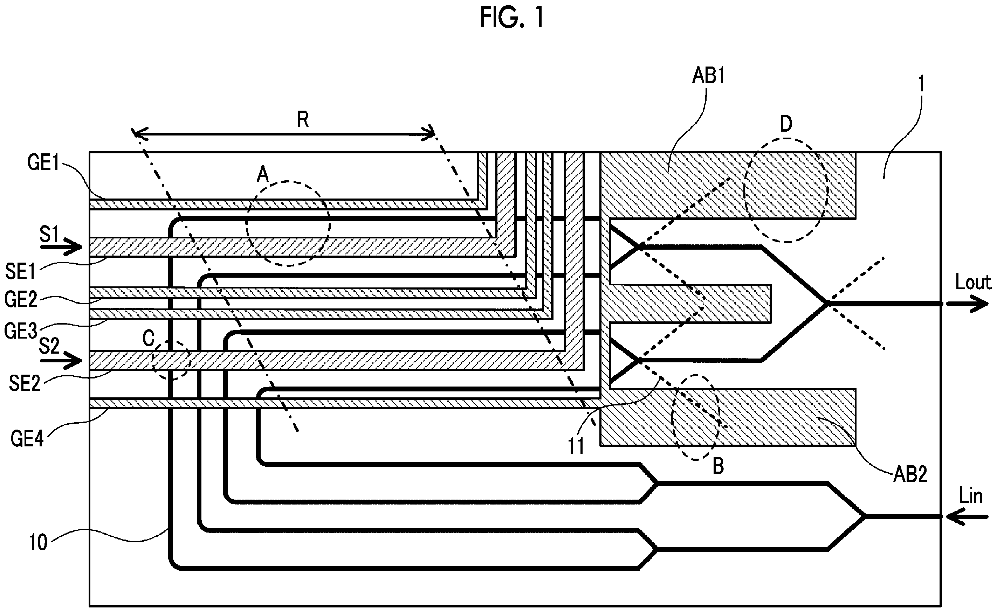

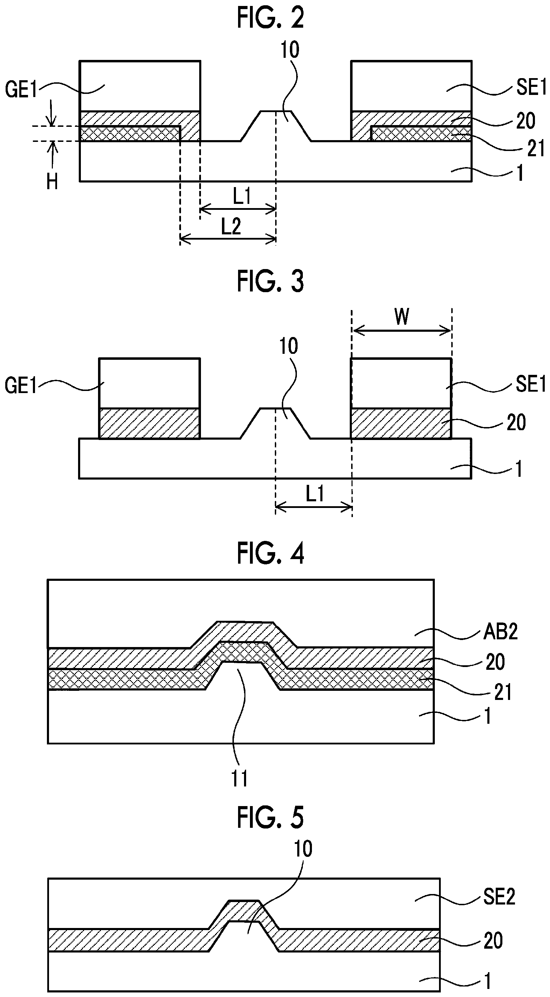

Hereinafter, an optical waveguide device of the present invention will be described in detail using preferred examples. A plan view illustrating an example of the optical waveguide device of the present invention is illustrated in FIG. 1. In addition, FIGS. 2 to 6 are diagrams (cross section views taken in a direction perpendicular to the plane of FIG. 1) illustrating a cross section state in a part corresponding to each of regions A to D in FIG. 1.

The optical waveguide device of the present invention is an optical waveguide device including an optical waveguide 10 formed on a substrate 1, and an electrode (SE1 and SE2, GE1 to GE4, AB1 and AB2) disposed on the substrate, in which a first underlayer 21 of a first material formed on an upper surface of the substrate 1 and a second underlayer 20 of a second material different from the first material formed on an upper surface of the first underlayer are disposed in at least a part of a region on the substrate in which the electrode is formed, and the electrode is formed on an upper side of the second underlayer.

As a material of the substrate 1 that has an electro-optic effect and that is used in the optical waveguide device of the present invention, substrates of lithium niobate (LN), lithium tantalate (LT), lead lanthanum zirconate titanate (PLZT), and the like or base materials obtained by doping these substrate materials with magnesium can be used. In addition, vapor-phase growth films and the like formed of these materials can be used.

As a method of forming the optical waveguide 10, a rib type optical waveguide obtained by forming a part corresponding to the optical waveguide to have a protruding shape in the substrate by, for example, etching the substrate 1 other than the optical waveguide or by forming grooves on both sides of the optical waveguide can be used. Furthermore, a refractive index can be further increased by diffusing Ti or the like on a surface of the substrate using a thermal diffusion method, a proton exchange method, or the like in accordance with the rib type optical waveguide. In addition, while the optical waveguide can be formed by forming a high-refractive index region obtained by thermally diffusing Ti or the like on the substrate 1, the rib type optical waveguide is more preferable because confinement of light is increased in the micro optical waveguide having a width and a height of approximately 1 µm.

In order to suppress a propagation loss caused by roughness of a surface of the rib type optical waveguide, a resin film that covers the optical waveguide may be provided. The resin film includes a permanent resist film or the like and uses a material having a lower refractive index than the optical waveguide. In addition, in a case where the electrode disposed across the optical waveguide is present, the resin film also functions as a buffer layer (protective film).

A thickness of the substrate (thin plate) 1 on which the optical waveguide 10 is formed is set to be 10 µm or less, more preferably 5 µm or less, and still more preferably 1 µm or less in order to achieve velocity matching between a microwave of a modulation signal and a light wave. In addition, a height of the rib type optical waveguide is set to be 4 µm or less, more preferably 3 µm or less, and still more preferably 1 µm or less or 0.4 µm or less. In addition, it is also possible to form a vapor-phase growth film on a reinforcing substrate and to process the film to have a shape of the optical waveguide.

In the substrate on which the optical waveguide is formed, the reinforcing substrate may be adhesively fixed to a lower side of the substrate 1 in FIG. 2 and the like via direct joining or through an adhesive layer of resin or the like in order to increase mechanical strength. As the reinforcing substrate to be directly joined, a substrate including an oxide layer of a material such as crystal, glass, or the like that has a lower refractive index than the optical waveguide and than the substrate on which the optical waveguide is formed, and that has a similar coefficient of thermal expansion to the optical waveguide or the like is preferably used. A composite substrate obtained by forming a silicon oxide layer on a silicon substrate and a composite substrate obtained by forming a silicon oxide layer on an LN substrate, which are abbreviated to SOI and LNOI, can also be used.

In addition, in the optical waveguide device of the present invention, an optical absorption coefficient of the first material used in the first underlayer is higher than an optical absorption coefficient of the second material used in the second underlayer. The "optical absorption coefficient" is a value with respect to an input wavelength of the optical waveguide device. This configuration can provide the electrode with a function of removing unnecessary light propagating through the substrate. In addition, conversely, an effect of suppressing absorption of the light wave propagating through the substrate can be expected in a region in which the second underlayer is disposed in contact with the surface of the substrate.

As the first material, metal such as Ti, Cr, Pt, or Fe having a relatively high optical absorption coefficient can be used. For example, the first material may have an optical absorption coefficient (absorption loss) of more than 10 dB/cm.

In addition, the first material has an oxidizing action that takes oxygen from the substrate of LN or the like and that causes deterioration in a drift characteristic of an optical modulator. Thus, a thickness of the first underlayer using the first material is set to 30 nm or less and more preferably 10 nm or less. A lower limit value of the first underlayer is set within a range in which the optical absorption coefficient (absorption loss) with the thickness is more than 10 dB/cm.

As the second material, a metal material such as Nb, Al, Cu, Ag, or Co that has a lower optical absorption coefficient than the first material and that has cubic crystals (body-centered cubic lattice structure) can be used. A role of the second underlayer is to suppress an increase in a plating particle size of the electrode and to have roughness Ra of the surface of the electrode to be 0.25 µm or less. The roughness Ra of the surface of the formed electrode can be calculated by performing calculation using Japanese Industrial Standards "JIS B 0601:1994", "JIS B 0601:2001", and the like.

In addition, while a thickness of the second underlayer is not particularly limited, the thickness of the second underlayer is set to the same thickness as the first underlayer or lower, specifically 10 nm or less, because as Nb or the like is increased in thickness, the optical absorption coefficient (absorption loss) is gradually increased.

In the electrode used in the optical waveguide device of the present invention, a structure of a underlayer varies depending on a location at which the electrode is formed.

The electrode is obtained by forming the underlayer on the surface of the substrate and by forming gold (Au) having a thickness of several µm to several tens of µm on the underlayer using a plating method. The structure of the underlayer includes (a) a laminated structure of the first underlayer and the second underlayer and (b) a structure including only the second underlayer. The structure in (a) has a function of absorbing the unnecessary light propagating through the substrate, and the structure in (b) provides a function of suppressing absorption of the light wave propagating through the substrate or through the optical waveguide.

Changing the structure of the underlayer based on the region in which the electrode is formed will be described using an example of the optical waveguide device illustrated in FIG. 1.

FIG. 1 is a plan view of the optical waveguide device, and the optical waveguide 10 is formed on the substrate 1. The light wave is input from Lin and is output from Lout. While the shape of the optical waveguide can employ various patterns, a nest type optical waveguide in which two Mach-Zehnder type optical waveguides are disposed parallel to each other is illustrated in FIG. 1. Since the light wave is input into the same side surface of the substrate 1 or output from the same side surface of the substrate 1, a structure of the nest type optical waveguide is folded by 180 degrees.

The electrode for applying an electric field to the optical waveguide is formed. The electrode includes a modulation electrode that applies a high-frequency signal, and a bias electrode that applies a DC bias voltage. In FIG. 1, only the modulation electrode is illustrated. Furthermore, the modulation electrode includes a signal electrode (SE1 and SE2) through which the microwave that is the high-frequency signal propagates, and a ground electrode (GE1 to GE4). In FIG. 1, an X-cut LN substrate is illustrated as an example, and the signal electrode and the ground electrode are installed to interpose the optical waveguide 10. Of course, in a case of a Z-cut LN substrate, the signal electrode is disposed on an upper side of the optical waveguide, and the ground electrode is disposed in at least one of positions between which the optical waveguide is interposed.

The high-frequency signal (S 1, S2) propagating through the modulation electrode is input from a side surface on a side opposite to the side surface on which the light wave is input into the optical waveguide or output from the optical waveguide. In an action portion R in which the high-frequency signal is applied to the optical waveguide, the optical waveguide and the electrode are configured to be close to each other so that the electric field formed by the electrode is efficiently applied to the optical waveguide. Accordingly, a drive voltage of the high-frequency signal input into the optical modulator can be reduced, and the optical modulator having a wider band can be implemented.

In a region A constituting the action portion, the structure of the underlayer of the electrode illustrated in FIG. 2 or FIG. 3 can be employed. In order to bring the modulation electrode (SE1, GE1) close to the optical waveguide to an extent of not absorbing the light wave propagating through the optical waveguide 10, the second underlayer 20 is disposed on the upper surface of the substrate 1 on a lower side (between distances L1 and L2 described later) of the modulation electrode closest to the optical waveguide. Specifically, the distance L1 from a center of the optical waveguide 10 to the modulation electrode is set to be twice or more than a mode field diameter (MFD) of the light wave propagating through the optical waveguide.

In addition, the upper surface of the substrate 1 is sequentially laminated with the first underlayer 21 and the second underlayer 20 on the lower side of the modulation electrode separated by more than the predetermined distance L2 from the optical waveguide. The predetermined distance L2 is set to be three times or more than the MFD and suppresses the propagation loss caused by absorption of a part of the light wave propagating through the optical waveguide because of an optical absorption function of the first underlayer. As described above, a thickness H of the first underlayer is set to be 30 nm or less and more preferably 10 nm or less.

Even in the same region A, in a case where it is required to narrow an electrode width W of the modulation electrode because of a relationship in disposition between the optical waveguide and other electrodes, the modulation electrode can include only the second underlayer 20 as illustrated in FIG. 3 instead of combined underlayers of different structures. Of course, one modulation electrode (for example, the signal electrode SE1) can include only the second underlayer as illustrated in FIG. 3, and an other modulation electrode (for example, the ground electrode GE1) can have a laminated structure of the first underlayer and the second underlayer as illustrated in FIG. 2.

Of course, the electrode on the optical waveguide formed on the Z-cut LN substrate preferably includes only the second underlayer as illustrated in FIG. 3. In addition, the electrode disposed near the optical waveguide employs the electrode structure illustrated in FIG. 2 or FIG. 3 as appropriate.

In FIG. 1, a radiated light optical waveguide 11 for deriving radiated light is formed in a Y-junction of the optical waveguide. A part of the radiated light is detected by a photo detector, not illustrated, and a drift state and the like of the optical modulator are monitored. The radiated light after being detected by the photo detector or the radiated light not introduced into the photo detector is the unnecessary light. Thus, in FIG. 1, the electrode (AB1 and AB2) is configured to be disposed along a propagation direction of the radiated light to absorb the unnecessary light.

In a region B in FIG. 1, in order to cover the radiated light optical waveguide 11 as illustrated in FIG. 4, a laminate of the first underlayer 21 and the second underlayer 20 is provided, and the electrode AB2 is disposed on the laminate. In addition, in a case where increasing the roughness of the surface of the electrode does not particularly pose problems, it is possible to omit the second underlayer 20 in FIG. 4.

In FIG. 1, the electrode is configured to extend to a part in which the radiation optical waveguide is formed, using a part of the ground electrode GE4. The present invention is not limited to such a configuration, and it is also possible to configure the electrode for absorbing the radiated light using a part of the electrode that applies the bias voltage.

Furthermore, in the electrode (AB1 and AB2), it is possible to form the electrode also in a region such as a region D other than the radiated light optical waveguide to absorb the unnecessary light propagating through the substrate 1. As a specific structure, as illustrated in FIG. 4, a laminate of the first underlayer 21 and the second underlayer 20 is provided on the surface of the substrate 1, and the electrode AB 1 is disposed on the laminate. In the region D, it is also possible to omit the second underlayer 20 as necessary in the same manner as in the region B.

As illustrated in a region C in FIG. 1, a part that is disposed across the optical waveguide 10 is present in the electrode. Thus, as illustrated in FIG. 5, under the electrode (for example, SE2) disposed on an upper side of the optical waveguide 10, the second underlayer 20 is disposed on an upper surface of the optical waveguide 10 to suppress absorption of the light wave propagating through the optical waveguide. In addition, a resin film such as a permanent resist may be formed to cover the optical waveguide 10 in FIG. 5 as a buffer layer, and the second underlayer 20 may be formed on the resin film. Furthermore, in a case of providing the resin film that covers the optical waveguide 10, it is possible to form the first underlayer 21 and the second underlayer 20 in FIG. 4 on the resin film.

Next, examples of applying the optical waveguide device of the present invention to an optical modulation device and to an optical transmission apparatus will be described. While the optical modulation device using the optical waveguide device illustrated in FIG. 1 will be described below, the present invention is not limited to the optical modulation device in FIG. 1 and can also be applied to an optical phase modulator, an optical modulator having a polarization combining function, an optical waveguide device in which a larger number of Mach-Zehnder type optical waveguides are integrated, a device joined to an optical waveguide device including other materials such as silicon, a device used as a sensor, and the like. Furthermore, the present invention can, of course, be applied to a high bandwidth-coherent driver modulator (HB-CDM).

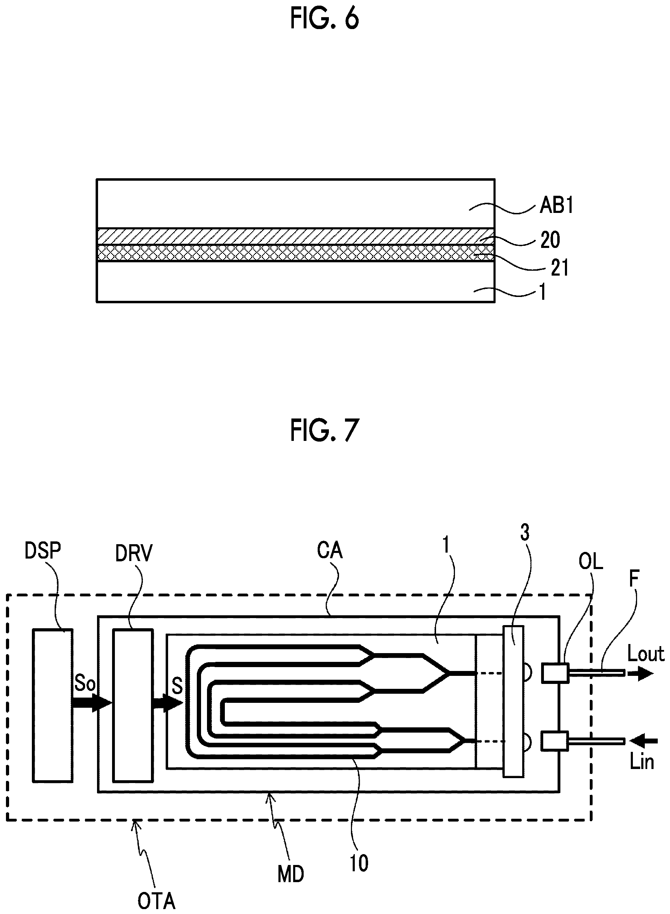

As illustrated in FIG. 7, the optical waveguide device includes the optical waveguide 10 formed on the substrate 1, and the modulation electrode (not illustrated) that modulates the light wave propagating through the optical waveguide 10. The optical waveguide device is accommodated inside a case CA. Furthermore, an optical modulation device MD can be configured by providing an optical fiber (F) through which the light wave is input into the optical waveguide or output from the optical waveguide. In FIG. 7, the optical fiber F is optically coupled to the optical waveguide 10 inside the optical waveguide device using an optical block 3 including an optical lens, a lens barrel OL, and the like. The present invention is not limited to the optical fiber F in FIG. 7. The optical fiber may be introduced into the case through a through-hole that penetrates through a side wall of the case. The optical fiber may be directly joined to an optical component or to the substrate, or the optical fiber having a lens function in an end portion of the optical fiber may be optically coupled to the optical waveguide inside the optical waveguide device.

An optical transmission apparatus OTA can be configured by connecting, to the optical modulation device MD, an electronic circuit (digital signal processor DSP) that outputs a modulation signal So causing the optical modulation device MD to perform a modulation operation. In order to obtain a modulation signal S to be applied to the optical waveguide device, it is required to amplify the modulation signal So output from the digital signal processor DSP. Thus, in FIG. 7, the modulation signal is amplified using a driver circuit DRV. The driver circuit DRV and the digital signal processor DSP can be disposed outside the case CA or can be disposed inside the case CA. Particularly, disposing the driver circuit DRV inside the case can further reduce the propagation loss of the modulation signal from the driver circuit.

### Industrial Applicability

As described above, according to the present invention, it is possible to provide an optical waveguide device that can suppress deterioration in a drift characteristic by suppressing formation of an oxygen-deficient layer in a substrate while maintaining a function of removing unnecessary light propagating through the substrate even in a case where an electrode is disposed on the substrate on which an optical waveguide is formed. In addition, it is possible to provide an optical waveguide device that can also suppress a propagation loss of a high-frequency signal by further decreasing roughness of a surface of an electrode. Furthermore, it is possible to provide an optical modulation device and an optical transmission apparatus using the optical waveguide device.

### Reference Signs List

1: substrate (thin plate, film body) on which optical waveguide is formed
10: optical waveguide
20: second underlayer
21: first underlayer
AB1 and AB2: electrode
GE1 to GE4: electrode (ground electrode)
SE1 and SE2: electrode (signal electrode)
R: action portion
F: optical fiber
OL: lens barrel
3: optical block
CA: case
MD: optical modulation device
DRV: driver circuit
DSP: digital signal processor
OTA: optical transmission apparatus

## Claims

1. An optical waveguide device comprising:
an optical waveguide formed on a substrate; and
an electrode disposed on the substrate,
wherein a first underlayer of a first material formed on an upper surface of the substrate and a second underlayer of a second material different from the first material formed on an upper surface of the first underlayer are disposed in at least a part of a region on the substrate in which the electrode is formed, and the electrode is formed on an upper side of the second underlayer.

2. The optical waveguide device according to claim 1,
wherein an optical absorption coefficient of the first material is higher than an optical absorption coefficient of the second material.

3. The optical waveguide device according to claim 1 or 2,
wherein a thickness of the first underlayer is 10 nm or less.

4. The optical waveguide device according to any one of claims 1 to 3,
wherein the electrode is provided with a modulation electrode including an action portion that applies an electric field of a high-frequency signal to the optical waveguide,
in the action portion, the second underlayer is disposed on the upper surface of the substrate under the modulation electrode closest to the optical waveguide, and
the upper surface of the substrate is sequentially laminated with the first underlayer and the second underlayer under the modulation electrode separated by more than a predetermined distance from the optical waveguide.

5. The optical waveguide device according to any one of claims 1 to 3,
wherein the substrate is sequentially laminated with the first underlayer and the second underlayer under the electrode formed in at least a part of a region in which unnecessary light propagates through the substrate.

6. The optical waveguide device according to any one of claims 1 to 3, wherein the second underlayer is disposed on an upper surface of the optical waveguide under the electrode disposed on an upper side of the optical waveguide.

7. The optical waveguide device according to any one of claims 1 to 3, wherein the first material is titanium, and the second material is niobium.

8. An optical modulation device comprising:
the optical waveguide device according to any one of claims 1 to 7;
a case accommodating the optical waveguide device; and
an optical fiber through which a light wave is input into the optical waveguide or output from the optical waveguide.

9. The optical modulation device according to claim 8,
wherein the optical waveguide device includes a modulation electrode for modulating the light wave propagating through the optical waveguide, and
an electronic circuit that amplifies a modulation signal to be input into the modulation electrode of the optical waveguide device is provided inside the case.

10. An optical transmission apparatus comprising:
the optical modulation device according to claim 8 or 9; and
an electronic circuit that outputs a modulation signal causing the optical modulation device to perform a modulation operation.
